# EUROPEAN PATENT APPLICATION

(11) **EP 3 211 471 A1**
(43) Date of publication of application: **30.08.2017**
(21) Application number: 15852667.3
(22) Date of filing: 26.08.2015
(51) Int. Cl.: G02B 27/02, G02B 27/22, G06F 3/14, G09G 5/00, H04N 5/64

(54) **VIRTUAL-IMAGE-DISTANCE CHANGING DEVICE, METHOD FOR CHANGING VIRTUAL IMAGE DISTANCE, PROGRAM**

(30) Priority: 23.10.2014 JP 2014216656
(71) Applicant: Sony Interactive Entertainment Inc., Tokyo 108-8270 (JP)
(72) Inventor: OTO, Tomohiro, Tokyo 108-0075 (JP)
(74) Representative: D Young & Co LLP
(86) International application number: PCT/JP2015/074108
(87) International publication number: WO 2016/063620

(57) **Abstract**

The object of the present invention is to realize a virtual image distance changing device and so on capable of presenting a target, an object to be viewed by a user, at a virtual image distance that corresponds to an actual depth of the target. The virtual image distance changing device includes a display panel, optics, depth information acquisition means, and distance changing means. The display panel displays an image that corresponds to image information. The optics guides the image displayed on the display panel to user's eyes and causes the user to view a virtual image that corresponds to the image. The depth information acquisition means acquires depth information that represents the depth of the target to be viewed, the object displayed on the display panel to be viewed by the user. The distance changing means changes a virtual image distance that represents a distance at which the virtual image is viewed by the user corresponding to the depth information.

## Description

### [Technical Field]

The present invention relates to a virtual image distance changing device, a virtual image distance changing method, and a program.

### [Background Art]

A head-mounted display (hereinafter referred to as an "HMD") that is mounted to a user's head and use is known as an image display device for displaying images. More specifically, for example, PTL 1 discloses a technology applied to a see-through head-mounted display that allows viewing of an outside world while at the same time allowing viewing of a virtual image presented at a given distance. The see-through head-mounted display moves a lens when determining that the user is walking to ensure that even if the user uses the head-mounted display while walking, he or she is not hindered from walking, thus bringing a distance of a virtual image presented (virtual image distance) closer than infinity.

### [Citation List]

### [Patent Literature]

[PTL 1] Japanese Patent Laid-Open No. 2012-194501

### [Summary]

### [Technical Problem]

In common head-mounted displays and PTL 1 (hereinafter referred to as the "related art"), however, a virtual image distance is fixed or set irrespective of a target displayed. As a result, in related art, the target is not displayed at the virtual image distance that corresponds to the actual target depth, the distance between a camera and a target to be viewed during shooting of the target, or the distance to the target anticipated in computer graphics.

In light of the foregoing, it is an object of the present invention to realize a virtual image distance changing device and so on capable of presenting a target to be viewed, an object to be done so by the user, at a virtual image distance that corresponds to an actual depth of the target, for example.

### [Solution to Problem]

(1) A virtual image distance changing device of the present invention includes a display panel, optics, depth information acquisition means, and distance changing means. The display panel displays an image that corresponds to image information. The optics guides the image displayed on the display panel to user's eyes and causes the user to view a virtual image that corresponds to the image. The depth information acquisition means acquires depth information that represents a depth of a target to be viewed, an object displayed on the display panel to be viewed by the user. The distance changing means changes a virtual image distance that represents a distance at which the virtual image is viewed by the user corresponding to the depth information.
(2) In the virtual image distance changing device described in (1) above, the depth information acquisition means includes line-of-sight direction acquisition means and depth estimation means. The line-of-sight direction acquisition means acquires line-of-sight direction information representing a direction of line of sight of the user. The depth estimation means estimates the depth based on the acquired line-of-sight direction information.
(3) In the virtual image distance changing device described in (1) or (2) above, the depth information is set in advance corresponding to the image information.
(4) In the virtual image distance changing device described in (3) above, the depth information is based on a given typical point in a center portion of the image information.
(5) In the virtual image distance changing device described in any one of (1) to (4) above, the distance changing means changes the virtual image distance after shifting the direction of line of sight of the user.
(6) In the virtual image distance changing device of described in any one of (1) to (5) above, the distance changing means changes the virtual image distance in a given range.
(7) In the virtual image distance changing device described in any one of (1) to (6) above, if a scene represented by the image information changes, the distance changing means changes the virtual image distance in a given time period after the scene change.
(8) In the virtual image distance changing device described in any one of (1) to (7) above, the distance changing means changes the virtual image distance by moving the display panel or a lens included in the optics.
(9) The virtual image distance changing device described in any one of (1) to (8) above is a head-mounted display.
(10) A virtual image distance changing method of the present invention displays an image that corresponds to image information. Further, the virtual image distance changing method guides the image displayed on the display panel to user's eyes and causes the user to view a virtual image that corresponds to the image. Still further, the virtual image distance changing method acquires depth information that represents a depth of a target to be viewed, an object displayed on the display panel to be viewed by the user. Still further, the virtual image distance changing method changes a virtual image distance that represents a distance at which the virtual image is viewed by the user corresponding to the depth information.
(11) A program of the present invention relates to a virtual image distance changing device that includes a display panel and optics. The display panel displays an image that corresponds to image information. The optics guides the image displayed on the display panel to user's eyes and causes the user to view a virtual image that corresponds to the image. The program causes a computer to function as depth information acquisition means and distance changing means. The depth information acquisition means acquires depth information that represents a depth of a target to be viewed, an object displayed on the display panel to be viewed by the user. The distance changing means changes a virtual image distance that represents a distance at which the virtual image is viewed by the user corresponding to the depth information.

### [Brief Description of Drawings]

[FIG. 1] FIG. 1 is a diagram illustrating an example of overview of an HMD in the present embodiment.
[FIG. 2] FIG. 2 is a diagram for describing an example of a hardware configuration of the HMD.
[FIG. 3] FIG. 3 is a diagram illustrating a main example of a functional configuration of a control section of the HMD.
[FIG. 4] FIG. 4 is a diagram illustrating an example of a functional configuration of a depth information acquisition section.
[FIG. 5A] FIG. 5A is a diagram for describing a change to a virtual image distance.
[FIG. 5B] FIG. 5B is a diagram for describing a change to a virtual image distance.
[FIG. 6] FIG. 6 is a diagram for describing an example of a change to a virtual image distance.
[FIG. 7A] FIG. 7A is a diagram for describing an example of a change to a virtual image distance.
[FIG. 7B] FIG. 7B is a diagram for describing an example of a change to a virtual image distance.
[FIG. 8] FIG. 8 is a diagram illustrating an example of a general processing flow of the HMD.

### [Description of Embodiment]

An embodiment of the present invention will be described below with reference to the accompanying drawings. It should be noted that the same or equivalent elements are denoted by the same reference numerals in the drawings and that redundant description will be omitted.

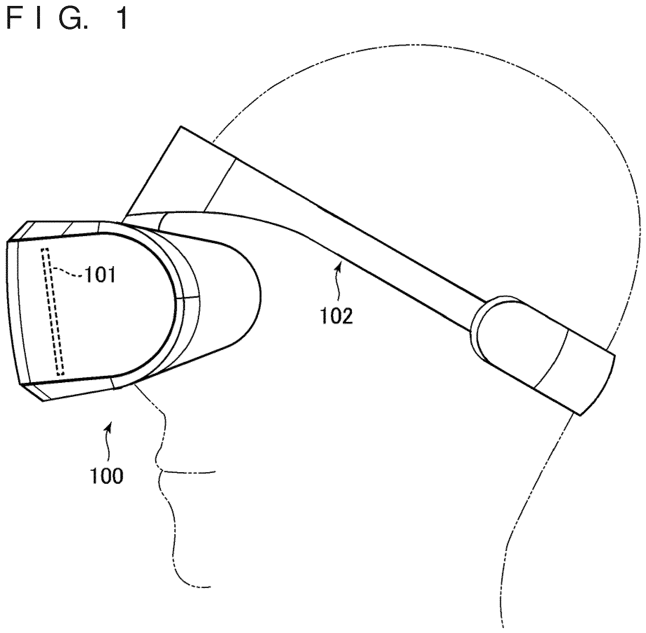

FIG. 1 is a diagram illustrating an example of overview of an HMD in the present embodiment. More specifically, FIG. 1 illustrates an example of a general side view of an HMD 100 when the HMD 100 is mounted to the head of a user.

As illustrated in FIG. 1, the HMD 100 includes a display panel 101 that displays a three-dimensional (3D) image corresponding to image information acquired. More specifically, for example, the display panel 101 displays an image for a right eye in a right-side area and an image for a left eye in a left-side area. It should be noted that the display panel 101 is not limited to the above and, for example, may be configured to display a 3D image in other way such as by frame sequential method. On the other hand, the display panel 101 includes, for example, a liquid crystal display panel 101 or an organic electroluminescence (EL) display panel 101. Further, the HMD 100 includes, for example, optics and a distance changing section. The optics guides the image displayed on the display panel 101 to user's eyes and causes the user to view a virtual image that corresponds to the image. The distance changing section changes a virtual image distance that represents a distance at which the virtual image is viewed by the user by moving a lens included in the optics or the display panel 101. The optics and the distance changing section will be described in more details later.

The HMD 100 includes a mounting band 102 for mounting the HMD 100 to the user's head. It should be noted that the above configuration of the HMD 100 is merely an example and that the present embodiment is not limited to the above.

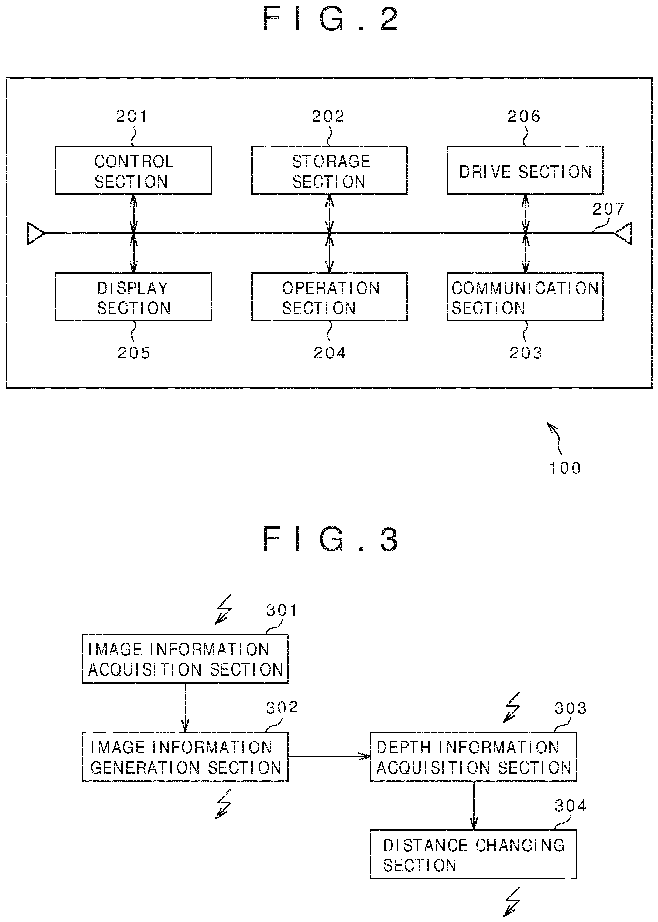

A description will be given next of an example of a hardware configuration of the HMD 100 in the present embodiment. FIG. 2 is a diagram for describing an example of a hardware configuration of the HMD. As illustrated in FIG. 2, the HMD 100 includes, for example, a control section 201, a storage section 202, a communication section 203, an operation section 204, a display section 205, and a drive section 206. It should be noted that the control section 201, the storage section 202, the communication section 203, the operation section 204, the display section 205, and the drive section 206 are connected to each other by an internal bus 207.

The control section 201 is, for example, a central processing unit (CPU), a microprocessor unit (MPU) or the like and operates in accordance with a program stored in the storage section 202. The storage section 202 includes, for example, an information recording medium such as a read-only memory (ROM), a random access memory (RAM) or the like and stores the program executed by the control section 201. Further, the storage section 202 serves as a work memory of the control section 201. It should be noted that the program may be supplied by downloading via a network. Alternatively, the program may be supplied by means of a variety of computer-readable information recording media such as compact disc (CD)-ROM, digital versatile disc (DVD)-ROM, semiconductor memories and the like.

The communication section 203 connects the HMD 100 to other information processing devices (e.g., game devices and servers) (not shown) via a network. The operation section 204 includes, for example, buttons and controllers and outputs details of an operation instructed by the user to the control section 201 corresponding to the operation instructed. The display section 205 corresponds to the above display panel 101 and displays information in accordance with an instruction from the control section 201.

The drive section 206 includes, for example, a motor (not shown) and a driver (not shown) that supplies a drive current to the motor. The driver supplies a drive current to the motor in accordance with an instruction from the control section 201, thus rotating the motor. The display section 205 is connected to the motor via a gear section (not shown) and so on and supported in such a manner as to move the display section as a result of rotation of the motor. In other words, the display section 205 moves as a result of rotation of the motor, thus changing a virtual image distance which will be described later. It should be noted that although the drive section 206 moves the display section 205 as a result of rotation of the motor, the present embodiment is not limited to the above configuration as long as the virtual image distance can be changed, for example, by moving a lens making up the optics.

It should be noted that the configuration of the HMD 100 illustrated in FIG. 2 is merely an example and that the present embodiment is not limited thereto. For example, the HMD 100 may include a camera and be configured such that line-of-sight direction information representing a user's direction of line of sight, which will be described later, is acquired corresponding to image information from the camera.

A description will be given next of an example of a functional configuration of the control section 201 of the HMD 100 in the present embodiment. FIG. 3 is a diagram illustrating a main example of a functional configuration of the control section of the HMD. As illustrated in FIG. 3, the HMD 100 functionally includes an image information acquisition section 301, an image information generation section 302, a depth information acquisition section 303, and a distance changing section 304, for example.

The image information acquisition section 301 acquires image information. More specifically, for example, the image information acquisition section 301 may be configured to acquire image information from an external information processing device (e.g., game device or server) (not shown) or image information stored in the storage section 202.

The image information generation section 302 generates, for example, a frame image to display on the display panel 101 every frame based on image information acquired by the image information acquisition section 301. The frame image is a frame image used to display a 3D image on the display panel 101 and corresponds, for example, to frame images for right and left eyes or those displayed by the frame sequential method as described above. Then, the display panel 101 displays the frame image generated.

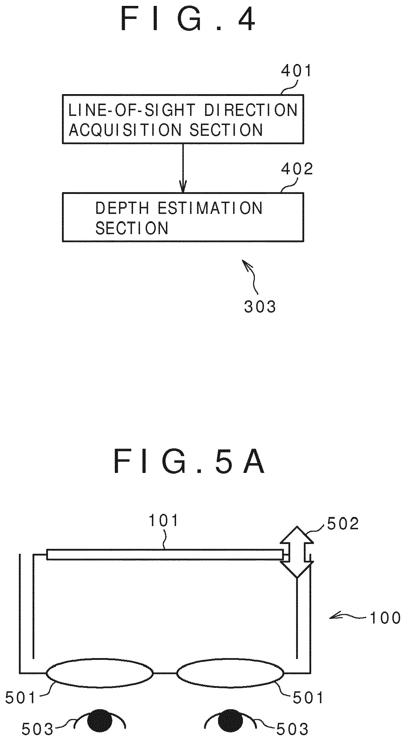

The depth information acquisition section 303 acquires depth information that corresponds to the frame image. Here, depth information corresponds, for example, to a depth of a target to be viewed by a user such as a distance from a center between the user's eyes to the target to be viewed, a virtual image. More specifically, for example, the depth information acquisition section 303 includes a line-of-sight direction acquisition section 401 and a depth estimation section 402 as illustrated in FIG. 4.

The line-of-sight direction acquisition section 401 acquires, for example, line-of-sight direction information representing the direction of line of sight of the user's eyes. More specifically, for example, the line-of-sight direction information corresponds to each of an angle from the position of each of the user's eyes to the object to be viewed. The depth estimation section 402 estimates, based on the line-of-sight direction, a depth of the target to be viewed by the user (corresponds to a distance from the center between the user's eyes to the target to be viewed, a virtual image), acquiring the depth as depth information. More specifically, for example, the depth estimation section 402 calculates the depth from the distance between the user's eyes and the angle of each line of sight. It should be noted that the distance between the user's eyes corresponds, for example, to a distance between centers of openings of the HMD 100 placed over the user's eyes. It should be noted that acquisition of depth information described above is merely an example and that the present embodiment is not limited thereto. For example, a target viewed from the line-of-sight direction may be identified such that the depth is estimated from parallax thereof. As for acquisition of line-of-sight direction information and so on, for example, eye tracking (gaze tracking) is known that detects the line-of-sight direction in real time. Therefore, a further detailed description will be omitted.

Alternatively, the depth estimation section 402 may be configured to acquire, for example, a depth map together with image information, acquiring depth information based on the depth map and line-of-sight direction information. The depth map is set up in advance to represent depth information of each of the targets included in the image information. Still alternatively, for example, the line-of-sight direction acquisition section 401 may be omitted such that depth information is acquired using the depth map based, for example, on a given typical point such as center portion of the image displayed. It should be noted that, in this case, the depth map may include only depth information of the typical point. On the other hand, the depth map is generated and set up in advance for generation of image information or other purposes. For example, the image information acquisition section 301 acquires the depth map together with image information.

The distance changing section 304 changes the virtual image distance of a virtual image to be viewed by the user by instructing the drive section 206 based on the depth information. That is, the distance changing section changes the virtual image distance based on one-frame-old depth of the target to be viewed. It should be noted that the present embodiment is not limited to one-frame-old depth of the target to be viewed and that the virtual image distance may be changed based on a depth that is several frames old or a statistical value of depth taken over several frames (e.g., average). More specifically, a case will be described as an example in which the optics includes one lens for each eye and the distance changing section 304 moves the display panel 101 to change the distance between the lenses and the display panel 101 for simplification of description.

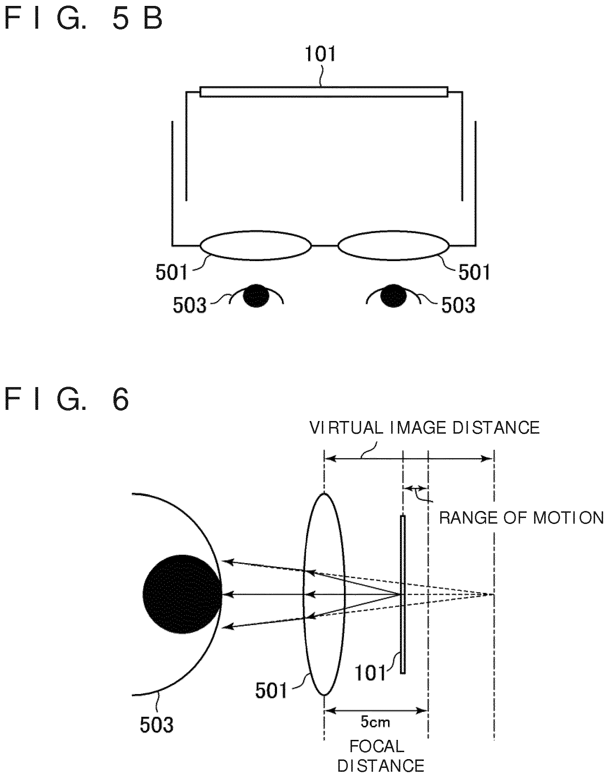

FIGS. 5A and 5B are diagrams for describing a change to the virtual image distance in the present embodiment. For example, the distance changing section 304 moves the display panel 101 away from lenses 501 as illustrated in FIG. 5B if acquired depth information is large (i.e., if a virtual image viewed at a far distance is presented). On the other hand, the distance changing section 304 moves the display panel 101 toward the lenses 501 as illustrated in FIG. 5A if acquired depth information is small (i.e., if the virtual image viewed at a close distance is presented). It should be noted that known motors, gears and other parts are used to move the display panel 101. Therefore, the description of the movement mechanism itself will be omitted. It should be noted that the lens 501 is provided, for example, for each user's eye 503 in the HMD 100 as illustrated in FIGS. 5A and 5B such that the user views, via the lenses 501, an image displayed on the display panel 101 at the virtual image distance based on the distance between the lenses 501 and the display panel 501. It should be noted that an arrow 502 in FIG. 5A indicates the direction of motion of the display panel 101.

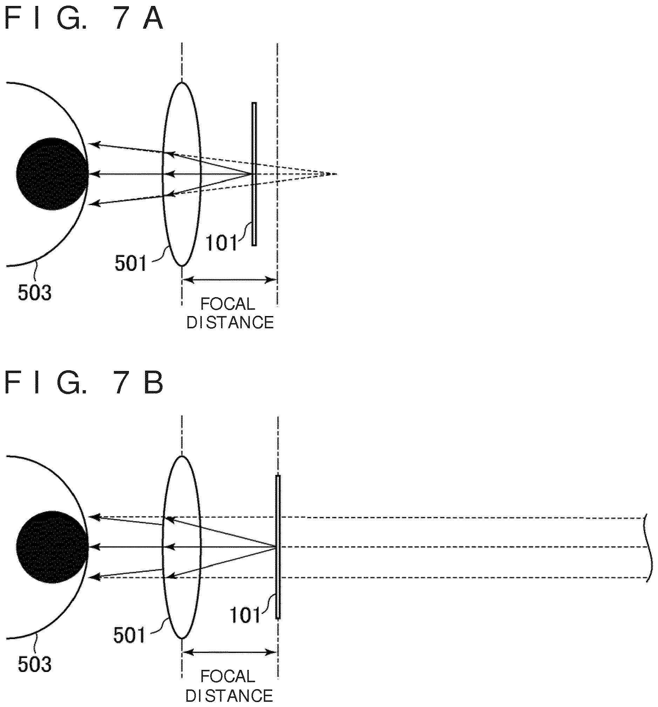

Here, in order to increase the virtual image distance to k-fold that of a focal distance, it is necessary to move the gap between the lenses 501 and the display panel 101 toward the side of the lenses 501 by 1/k the focal distance. For example, if the focal distance is 5cm as illustrated in FIG. 6, and if the virtual image distance is changed from 1 m to infinity, the display panel 101 needs a 2.5 mm range of motion. In this case, therefore, it is only necessary to ensure that the distance changing section 304 can move the display panel 101 in the range of up to 2.5 mm. This configuration makes it possible to change the virtual image distance from a given short distance to infinity as illustrated, for example, in FIGS. 7A and 7B. Here, FIG. 7A illustrates a case in which the virtual image distance is short, and FIG. 7B illustrates a case in which the virtual image distance is infinity.

It should be noted that although a case was described above in which the optics mainly included one lens 501 for each eye, the optics may include a plurality of lenses. It is needless to say that although the operation in this case is different from the above case in which the optics included one lens, the virtual image distance is changed corresponding to the depth information.

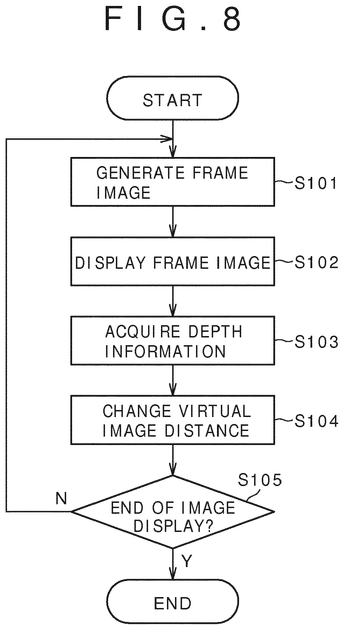

A description will be given next of an example of a general processing flow of the HMD 100 in the present embodiment. FIG. 8 is a diagram illustrating an example of a general processing flow of the HMD 100 in the present embodiment.

As illustrated in FIG. 8, the image information generation section 302 generates a frame image to be displayed on the display panel 101 every frame, for example, based on image information acquired by the image information acquisition section 301 (S101). The display panel 101 displays the generated frame image (S102). The depth information acquisition section 303 acquires depth information that corresponds to the frame image (S103). As described above, the depth information may be, for example, estimated from a line-of-sight direction or acquired based on a depth map. The distance changing section 304 changes the virtual image distance based on the depth information (S104).

Next, the image information generation section 302 determines whether or not the display of all the image information is complete (S105). More specifically, for example, the image information generation section 302 determines that the display of all the image information is complete when the display of image information is terminated by the user or when the generation of the last frame image is complete.

Then, if the image information generation section 302 determines that the display of all the image information has yet to be complete, the image information generation section 302 returns to S101 and repeats the processes from S102 to S104 such as displaying a frame image to be displayed on the display panel 101 next. On the other hand, when the image information generation section 302 determines that the display of all the image information is complete, the image information generation section 302 terminates the processes.

It should be noted that the above processing flow is merely an example and that the present embodiment is not limited to above. For example, although a case was described in the above flow in which the display panel 101 was moved based on corresponding depth information mainly every frame image, the display panel 101 may be moved by acquiring depth information every given number of frame images (e.g., every given number of frame images) as described above. On the other hand, if the above depth map is used to estimate depth information, for example, the depth information may be acquired prior to S102.

The present embodiment realizes a head-mounted display and so on that permit viewing of a target to be viewed at a virtual image distance that corresponds to the actual target depth, the distance between a camera and the target to be viewed during shooting of the target, or the distance to the target anticipated in computer graphics, for example. This makes it possible for the user, for example, to view the target to be viewed more naturally and to view the target to be viewed in a more realistic manner.

The present invention is not limited to the above embodiment, and the configuration shown in the above embodiment may be replaced with the one that is substantially identical, that provides the identical effect, or that achieves the same purpose.

For example, although a case was described above in which the virtual image distance, as an example, was dynamically changed from 1 m to infinity mainly corresponding to depth information, given setting modes may be provided to restrict the virtual image distance range. More specifically, the virtual image distance may be restricted to a range from 1 to 10 m in a first setting mode and from 10 m to infinity in a second setting mode. In this case, the virtual image can be viewed in a range that corresponds to the desired of each user. More specifically, for example, the above first setting mode is used if the user is short-sighted and the above second setting mode if the user is long-sighted, thus allowing the user to view a target at a comfortably visible virtual image distance.

Further, a mode may be provided in which the virtual image distance is changed to the one obtained by multiplying the depth information by a given value corresponding to depth information depth information. For example, the virtual image distance is 10 m when the depth information is 1 m, and the virtual image distance is 100 m when the depth information is 10 m. Alternatively, for example, the virtual image distance may be changed to a farther distance when the depth information is equal to a given value or greater and to a closer distance when the depth information is equal to the given value or smaller. This may provide a more impressive viewing experience and so on depending on image information.

Further, whether or not a scene represented by image information has changed may be determined with the virtual image distance maintained unchanged for a given time period after the scene change so that the virtual image distance is changed corresponding to the direction of line of sight during the given time period. As a result, even if a scene occurs in which the virtual image distance shifts suddenly from infinity to a close distance, the user can view a target to be viewed with more comfort, for example.

Further, the distance changing section 304 may change the virtual image distance after shifting of the line of sight and maintain the virtual image distance unchanged during the shifting of the line of sight. More specifically, for example, the distance changing section 304 maintains the virtual image distance unchanged while the line-of-sight direction acquisition section 401 is detecting the shifting of the direction of line of sight and changes the virtual image distance after the shifting of the line of sight stops. More specifically, for example, the virtual image distance is changed when the line of sight remains unchanged for a given time period. Alternatively, the virtual image distance may be maintained unchanged if the line of sight shifts a given distance or more. This makes it possible for the user to view a target to be viewed with more comfort.

Further, although a case was described above in which the HMD 100 mainly handled processes such as generation of image information and estimation of depth information, these processes may be handled by an information processing device (e.g., game device or server) connected to the HMD 100. More specifically, for example, the HMD 100 may be configured to acquire parallax direction information, send the parallax direction to the information processing device, and acquire depth information generated by the information processing device.

Still further, although the HMD 100 was cited above as an example of a virtual image distance changing device, the virtual image distance changing device includes devices that permit observation of a light source (diffused reflected light) through optics such as electronic finder, digital microscope eyepiece, and electronic binoculars, for example.

It should be noted that the above modification examples may be used in combination such as maintaining the virtual image distance unchanged during shifting of the user's line of sight while at the same time using a depth map as long as they are compatible with each other.

## Claims

1. A virtual image distance changing device comprising:
a display panel operable to display an image that corresponds to image information;
optics operable to guide the image displayed on the display panel to user's eyes and cause the user to view a virtual image that corresponds to the image;
depth information acquisition means operable to acquire depth information that represents a depth of a target to be viewed, an object displayed on the display panel to be viewed by the user; and
distance changing means operable to change a virtual image distance that represents a distance at which the virtual image is viewed by the user corresponding to the depth information.

2. The virtual image distance changing device of claim 1, wherein
the depth information acquisition means includes:
line-of-sight direction acquisition means adapted to acquire line-of-sight direction information representing a direction of line of sight of the user; and
depth estimation means adapted to estimate the depth based on the acquired line-of-sight direction information.

3. The virtual image distance changing device of claim 1, wherein
the depth information is set in advance corresponding to the image information.

4. The virtual image distance changing device of claim 3, wherein
the depth information is based on a given typical point in a center portion of the image information.

5. The virtual image distance changing device of claim 1, wherein
the distance changing means changes the virtual image distance after shifting a direction of line of sight of the user.

6. The virtual image distance changing device of claim 1, wherein
the distance changing means changes the virtual image distance in a given range.

7. The virtual image distance changing device of claim 1, wherein
if a scene represented by the image information changes, the distance changing means changes the virtual image distance in a given time period after the scene change.

8. The virtual image distance changing device of claim 1, wherein
the distance changing means changes the virtual image distance by moving the display panel or a lens included in the optics.

9. The virtual image distance changing device of claim 1, wherein the virtual image distance changing device is a head-mounted display.

10. A virtual image distance changing method comprising:
displaying an image that corresponds to image information;
guiding the image displayed on the display panel to user's eyes and causing the user to view a virtual image that corresponds to the image;
acquiring depth information that represents a depth of a target to be viewed, an object displayed on the display panel to be viewed by the user; and
changing a virtual image distance that represents a distance at which the virtual image is viewed by the user corresponding to the depth information.

11. A program relating to a virtual image distance changing device, the virtual image distance changing device including a display panel operable to display an image that corresponds to image information, and optics operable to guide the image displayed on the display panel to user's eyes and cause the user to view a virtual image that corresponds to the image, the program causing a computer to function as:
depth information acquisition means adapted to acquire depth information that represents a depth of a target to be viewed, an object displayed on the display panel to be viewed by the user; and
distance changing means adapted to change a virtual image distance that represents a distance at which the virtual image is viewed by the user corresponding to the depth information.
